# EUROPÄISCHE PATENTANMELDUNG

(11) **EP 1 992 847 A1**
(43) Veröffentlichungstag der Anmeldung: **19.11.2008**
(21) Anmeldenummer: 07009843.9
(22) Anmeldetag: 16.05.2007
(51) Int. Cl.: F16J 15/08, F02F 11/00

(54) **Metallische Flachdichtung**

(71) Anmelder: REINZ-Dichtungs-GmbH, 89233 Neu-Ulm (DE)
(72) Erfinder: Hoehe, Kurt, 89129 Langenau (DE); Ruess, Bernd, 89269 Voehringen 2 (DE)
(74) Vertreter: Tomerius, Isabel

(57) **Zusammenfassung**

Die Erfindung betrifft eine metallische Flachdichtung (1), umfassend eine erste Dichtungslage (2) und eine zweite Dichtungslage (3), wobei die beiden Dichtungslagen (2,3) übereinander und unmittelbar aneinander angrenzend angeordnet sind, eine Durchgangsöffnung (4), die mit konstanter Größe durch beide Dichtungslagen (2,3) hindurchgeht, und in der ersten Dichtungslage (2) eine die Durchgangsöffnung (4) vollständig umlaufende Sicke (5), die mit ihrem Scheitelbereich (6) in einem Sickenaufstandsbereich (7) auf der zweiten Dichtungslage (3) aufsteht. Die zweite Dichtungslage (3) weist eine ringförmige Ausnehmung (8) auf, die sich vom Rand (9) der Durchgangsöffnung (4) zumindest bis hinter den Sickenaufstandsbereich (7) erstreckt.

## Beschreibung

Die Erfindung betrifft eine metallische Flachdichtung und insbesondere eine Zylinderkopfdichtung, umfassend eine erste Dichtungslage und eine zweite Dichtungslage, wobei die beiden Dichtungslagen übereinander und unmittelbar aneinander angrenzend angeordnet sind, eine Durchgangsöffnung, die mit konstanter Größe durch beide Dichtungslagen hindurchgeht, und in der ersten Dichtungslage eine die Durchgangsöffnung vollständig umlaufende Sicke, die mit ihrem Scheitelbereich in einem Sickenaufstandsbereich auf der zweiten Dichtungslage aufsteht.

Zur Abdichtung weisen metallische Flachdichtungen (im Folgenden als Dichtungen bezeichnet) üblicherweise in wenigstens einer Dichtungslage mindestens eine Sicke auf, die die abzudichtende Öffnung umläuft. Um ein vollständiges und irreversibles Abflachen der Sicke zu verhindern und die Elastizität der Sicke dauerhaft zu gewährleisten, besitzen solche Dichtungen häufig einen Stopper, der die maximale Komprimierbarkeit der Sicke vorgibt und die Sicke vor einem Zusammenpressen bis in den unelastischen Bereich schützt. Ein solcher Stopper ist beispielsweise in Form eines Stopperringes aus der US 5,713,580 A bekannt. Der ringförmige Stopper grenzt dort unmittelbar an die abzudichtende Öffnung. Eine mittlere Dichtungslage ist in Radialrichtung an den Stopper angesetzt bzw. der Stopper ist als eigenständiges Bauteil in die mittlere Dichtungslage eingesetzt, wobei die Dicke des Stoppers größer ist als die Dicke der angrenzenden Dichtungslage.

Daneben ist es beispielsweise aus der EP 0 736 709 A1 bekannt, ergänzend zu einem die Öffnung umgebenden Stopper einen zusätzlichen Stopper auf eine Dichtungslage aufzuschweißen. Bei der Dichtung der EP 0 736 709 A1 ist die Sicke somit von in Radialrichtung vor und hinter der Sicke liegenden Stoppern umgeben. Damit soll eine gleichmäßigere Einfederung der Sicke erreicht werden. Zudem ist es aus der EP '709 bekannt, im unmittelbaren Aufstandsbereich des Sickenscheitels auf der benachbarten Dichtungslage eine Materialauflage oder eine Nut vorzusehen, um auf diese Weise ein Höhenprofil um die Öffnung herum zu erzeugen. Dieses Vorgehen ist jedoch sehr aufwändig. Außerdem führt die Anordnung des Sickenscheitels in der Nut dazu, dass der Federweg der Sicke durch die Flanken der Nut begrenzt wird und die Sicke nicht optimal arbeiten kann.

Bei den oben beschriebenen Dichtungen handelt es sich im Allgemeinen um dreilagige Konstruktionen, bei denen der Stopper in oder an der mittleren Dichtungslage vorhanden ist und beidseitig zu der Stopperlage Decklagen angeordnet sind, welche jeweils Sicken aufweisen, deren Scheitel auf der Stopperlage aufstehen. Wird eine solche Konstruktion zur Abdichtung eines Dichtspalts, im Falle einer Zylinderkopfdichtung also des Abstands zwischen der Unterkante des Zylinderkopfs und der Oberkante des Motorblocks von geringer Höhe eingesetzt, erfordert dies eine Verringerung der Dicke der Dichtungslagen, damit die Dichtung im Dichtspalt Platz findet. Damit geht häufig jedoch eine Verringerung der Stabilität der Dichtung einher. Besonders im Bereich der Sicken können Risse oder Materialbrüche auftreten.

Um die Anzahl der Dichtungslagen zu verringern, ist unter anderem vorgeschlagen worden, den Stopper in derselben Dichtungslage wie die Sicke auszubilden. Dies erfordert in der Regel erneut das Anbringen von Materialauflagen - diesmal auf der die Sicke enthaltenden Dichtungslage - und erhöht damit den Aufwand bei deren Herstellung. Anstelle von separaten Auflagen kann der Stopper auch von einem Falz gebildet werden, der durch Umfalzen des Randbereiches der Dichtungslage im Bereich um die abzudichtende Durchgangsöffnung herum erzeugt wird. Neben der aufwändigen Fertigung solcher Falze ist dabei insbesondere von Nachteil, dass der Falz immer nur mit einem Vielfachen der Dicke der Dichtungslage, aus der er herausgefalzt wurde, erzeugt werden kann. Die Erzeugung eines Höhenprofils ist daher praktisch nicht möglich.

Ein weiterer Nachteil der Dichtungen des Standes der Technik, welche einen Stopper mit einer solchen Dicke aufweisen, dass er über die Dichtungslage hervorspringt, an der er befestigt ist, liegt im Auftreten von Verzügen in den abzudichtenden Gegenflächen - im Falle einer Zylinderkopfdichtung also Motorblock und vor allem Zylinderkopf. Diese Verzüge führen zu einem erhöhten Ölverbrauch und vermehrten Emissionen.

Angesichts der vorstehend beschriebenen Probleme ist es die A u f g a b e der vorliegenden Erfindung, eine metallische Flachdichtung anzugeben, die zu möglichst geringen Verzügen der abzudichtenden Gegenflächen führt, sich zur Abdichtung unterschiedlich großer Dichtspalte eignet und dabei gleichzeitig einfach und kostengünstig zu realisieren ist.

Die Lösung dieser Aufgabe gelingt mit einer metallischen Flachdichtung gemäß Anspruch 1 sowie den Verwendungen der metallischen Flachdichtung gemäß den Ansprüchen 13 und 14. Bevorzugte Ausführungsformen sind in den Unteransprüchen beschrieben.

Die Erfindung betrifft also eine metallische Flachdichtung, die eine erste Dichtungslage und eine zweite Dichtungslage umfasst, wobei die beiden Dichtungslagen übereinander und unmittelbar aneinander angrenzend angeordnet sind. Durch beide Dichtungslagen geht eine Durchgangsöffnung mit konstanter Größe hindurch. Konstante Größe bedeutet in diesem Zusammenhang, dass die Ränder der verschiedenen Dichtungslagen um die Durchgangsöffnung untereinander maximal einen radialen Abstand von 0,4 mm, bevorzugt 0,2 mm haben, der aufgrund von Fertigungstoleranzen entsteht. In der ersten Dichtungslage ist eine die Durchgangsöffnung vollständig umlaufende Sicke vorhanden, die mit ihrem Scheitelbereich in einem Sickenaufstandsbereich auf der zweiten Dichtungslage aufsteht. Die zweite Dichtungslage weist eine ringförmige Ausnehmung auf, die sich vom Rand der Durchgangsöffnung zumindest bis hinter den Sickenaufstandsbereich erstreckt.

Der Grundgedanke der Erfindung ist, eine Ausnehmung in der den Sickenaufstandsbereich bildenden Dichtungslage vorzusehen, die sich vom Rand der Durchgangsöffnung zumindest bis hinter den Sickenaufstandsbereich erstreckt. Die Ausnehmung auf der der ersten Dichtungslage zugewandten Seite der zweiten Dichtungslage ist dazu zweckmäßig ringförmig und umgibt die von der Sicke abgedichtete Durchgangsöffnung. Ausgehend vom Rand der Durchgangsöffnung weist die zweite Dichtungslage in Radialrichtung nach außen somit auch einen Bereich ohne Ausnehmung auf, der gegenüber dem Bereich mit der Ausnehmung einen dickeren Querschnitt hat. Außerhalb der Ausnehmung, d.h. in Richtung des Dichtungsaußenrandes, wird damit ein Vorsprung gebildet, der einen Verformungsbegrenzer für die in der Ausnehmung aufstehende Sicke bildet. Auf diese Weise gelingt es, auf zusätzliche Stopperelemente oder Falze in den Dichtungslagen im Bereich der Durchgangsöffnung zu verzichten und gleichzeitig die Sicke vor einer übermäßigen Komprimierung zu schützen. Wesentlich für die Begrenzung der Komprimierbarkeit der Sicke ist die Ausnehmung in der zweiten Dichtungslage und die Lage der Ausnehmung in Relation zur Sicke in der ersten Dichtungslage. Die Sicke der ersten Dichtungslage ist dabei in der Weise angeordnet, dass sie im Bereich der Ausnehmung auf der zweiten Dichtungslage aufsteht. Dieser Bereich wird im Folgenden als Sickenaufstandsbereich bezeichnet.

Der Sickenaufstandsbereich bildet eine um die Durchgangsöffnung umlaufende, geschlossene Linie, deren Breite sich in Abhängigkeit von der Sickenform und vom Anpressdruck ändern kann. Die Elastizität der Sicke ermöglicht es, dass sie Dichtspaltänderungen während des Betriebs folgen kann. Beim Einbau, d.h. beim Anziehen der Schrauben, wird die Sicke bis auf Stopperhöhe komprimiert. Infolge der Verbrennungsprozesse (Explosionen) folgt die Sicke der Vergrößerung des Dichtspalts unter Beibehaltung der für die Dichtheit erforderlichen Mindestpressung. Sie wird dabei immer wieder auf Stopperhöhe verpresst. Die Dichtung ist ab diesem Punkt im Wesentlichen nicht weiter komprimierbar, da die erste Dichtungslage großflächig auf der zweiten Dichtungslage aufliegt. In diesem Stadium ist die Sicke, die im Bereich der Ausnehmung auf der zweiten Dichtungslage aufsteht bzw. in den durch die Ausnehmung zwischen der ersten und der zweiten Dichtungslage gebildeten Hohlraum hineinragt, allerdings noch nicht bis in den unelastischen Bereich komprimiert. Der die Ausnehmung begrenzende Vorsprung in der zweiten Dichtungslage verhindert vielmehr, dass die Sicke zu weit zusammengedrückt wird. Der Rand der Ausnehmung, d.h. ggf. das gesamte Hinterland, erfüllt somit eine Stopperfunktion, ohne dass hierfür jedoch eine Materialauftragung in Form einer Auflage, Umfalzung o.ä. erforderlich wäre. Die erfindungsgemäße Ausbildung der zweiten Dichtungslage mit Ausnehmung ermöglicht vielmehr, die in der zweiten Dichtungslage erforderlichen Strukturen durch etablierte und preiswerte Verfahrenstechniken, beispielsweise Prägen, Schleifen oder Fräsen, zu erhalten und gleichzeitig eine zu starke Komprimierung der Sicke zu verhindern. Wesentliches Merkmal der Erfindung ist somit, dass eine Verformungsbegrenzung der Sicke der ersten Dichtungslage durch eine vom Rand der Durchgangsöffnung bis in Radialrichtung hinter den Sickenaufstandbereich verlaufende Ausnehmung ermöglicht wird.

Die Ausnehmung sollte so groß sein, dass auch bei maximal zulässiger Komprimierung der Sicke - also bis die erste Dichtungslage auf dem die Ausnehmung umgebenden Randabschnitt der zweiten Dichtungslage aufliegt - die äußere Sickenflanke einen Abstand zum Rand der Ausnehmung aufweist. Anders gesagt, sollte sich der Rand der Ausnehmung nicht in die Sickenflanke eingraben können, da dies die Stabilität der Sicke gefährden würde. Andererseits sollte der Abstand zwischen Sicke und Rand der Ausnehmung nicht so groß sein, dass die gewünschte Stützwirkung für die Sicke nicht mehr ausgeübt wird. Bezüglich des Abstands zwischen Sicke und Rand der Ausnehmung sowie der Relation von Sickenhöhe und Tiefe der Ausnehmung kann grundsätzlich auf das zurückgegriffen werden, was bereits für Sicke und herkömmlichen Stopper bekannt ist.

So liegen typische Dickenunterschiede zwischen dem Bereich der Ausnehmung und dem sich an den Bereich mit der Ausnehmung anschließenden Bereich der zweiten Dichtungslage zwischen 0,03 und 0,40 mm und ganz besonders zwischen 0,05 und 0,20 mm. Dieser Dickenunterschied entspricht dem Überstand und damit der Höhe des Stoppers, der durch die Ausnehmung für die Sicke gebildet wird. Die Breite der Ausnehmung bzw. die Distanz zwischen dem Rand der Ausnehmung und dem Rand der Durchgangsöffnung liegt vorzugsweise bei 1 bis 6 mm und ganz besonders bei 2 bis 4 mm.

Ein wesentlicher Vorteil der Erfindung liegt darin, dass der Bereich der zweiten Dichtungslage, der die Ausnehmung umfasst, integral und einstückig mit den radial außerhalb des Sickenaufstandbereiches liegenden Bereichen der zweiten Dichtungslage ausgebildet ist. Diese einteilige Ausbildung macht zusätzliche Arbeitsschritte wie das Einsetzen einer Ringeinlage um die Durchgangsöffnung oder das Anbringen eines separaten Stopperelements überflüssig. Zudem ist die einstückige, integrale Ausbildung besonders stabil; Ermüdungserscheinungen an den Befestigungsstellen zusätzlicher Elemente treten nicht auf. Die erfindungsgemäße Flachdichtung benötigt zudem kein in seiner Höhe über eine benachbarte Dichtungslage vorspringendes Stopperelement, das zu Verzügen an den abzudichtenden Gegenflächen führen könnte. Neben der Verbesserung der Dichtigkeit und dem geringeren Verschleiß bedeutet dies im Falle von Zylinderkopfdichtungen auch eine Verringerung des Ölverbrauchs und eine Reduzierung der Emissionen.

Die Erfindung kann vorteilhaft bereits für lediglich zweilagige Dichtungen eingesetzt werden. Eine Anpassung an den abzudichtenden Dichtspalt kann auf einfache Weise vor allem durch Einstellung der Dicke der zweiten Dichtungslage erzielt werden. Gleichzeitig kann durch geeignete Einstellung der Tiefe der Ausnehmung auch die erforderliche Stopperhöhe erreicht werden, ohne dass eine Beschränkung durch vorgegebene Materialstärken für die bislang üblichen Stopperlauflagen oder Falze bestünde. Eine zweilagige Dichtung bietet sich besonders zur Abdichtung eines relativ kleinen Dichtspaltes an. Verglichen mit den eingangs zitierten dreilagigen Konzepten des Standes der Technik können sowohl für die erste als auch für die zweite Dichtungslage der erfindungsgemäßen Dichtung größere Materialdicken gewählt werden, so dass die Dichtung an den motorspezifischen Dichtspalt angepasst werden kann. Die erste Dichtungslage weist dabei Dicken von 0,1 bis 0,5 mm, bevorzugt 0,15 bis 0,3 mm auf; die zweite Dichtungslage 0,2 bis 2 mm, bevorzugt 0,3 bis 1,5 mm. Die Erfindung kann jedoch von Vorteil auch für drei- oder mehrlagige Dichtungen eingesetzt werden, vor allem, wenn größere Dichtspalte abzudichten sind. Die Anpassung der Gesamtdicke der Dichtung erfolgt erneut zweckmäßig, nachdem die Dicke der Sicken umfassenden Dichtungslagen unter Berücksichtigung von deren Funktionalität festgelegt wurde, durch gezielte Einstellung der Dicke der zweiten, die Ausnehmung umfassende Dichtungslage.

Diese zweite Dichtungslage weist erfindungsgemäß zumindest im Bereich der Durchgangsöffnung keine elastisch verformbaren Dichtungselemente, sondern lediglich die Ausnehmung auf. In einer bevorzugten Variante der Erfindung besitzt die zweite Dichtungslage über ihre gesamte Ausdehnung überhaupt keine elastisch verformbaren Dichtungselemente. In Zylinderkopfdichtungen werden derartige Dichtungslagen üblicherweise als Distanzlagen bezeichnet. Eine solche Ausbildung hat den Vorteil, dass die zweite Dichtungslage auch aus nicht-elastischen Materialien bestehen kann. Es können daher auch preiswerte Stahlsorten verwendet werden. Bevorzugt ist beispielsweise Kohlenstoffstahl. Die Materialauswahl richtet sich neben der Art der beabsichtigten Verarbeitung zum Beispiel auch nach den zu erwartenden Korrosionsproblemen bei der Anwendung.

Die erste Dichtungslage besteht zweckmäßig aus einem elastisch verformbaren Material, beispielsweise aus Federstahl. Dabei ist die Anzahl der Sicken nicht auf eine die Durchgangsöffnung umlaufende Sicke beschränkt. Es können ohne Weiteres auch mehrere, üblicherweise konzentrisch zueinander verlaufende Sicken oder auch Prägungen neben der Sicke in der ersten Dichtungslage vorhanden sein. Außerdem ist es selbstverständlich möglich, dass in der Dichtung mehr als eine Durchgangsöffnung von einer Sicke in der ersten Dichtungslage und von einer Ausnehmung in der zweiten Dichtungslage umgeben ist. Im Falle von Zylinderkopfdichtungen sind bevorzugt alle Brennraumöffnungen in dieser Weise abgedichtet. Zudem können weitere Durchgangsöffnungen vorhanden sein, die meist auf herkömmliche Weise abgedichtet sind, beispielsweise mittels einer Sicke oder einer Elastomerwulst. Zum Beispiel handelt es sich bei Zylinderkopfdichtungen bei diesen weiteren Durchgangsöffnungen um Öl-, Kühlwasser- oder Schraubenöffnungen, die üblicherweise im so genannten Hinterland der Dichtung, also näher zum Außenrand der Dichtung hin, angeordnet sind. In Einzelfällen kann die erfindungsgemäße Kombination aus Sicke(n) und Ausnehmung(en) auch für derartige Durchgangsöffnungen verwendet werden. Insbesondere für Dichtungen, die auf ihrer gesamten Fläche erhöhter Dynamik ausgesetzt sind, wie beispielsweise Kompressorendichungen, wird die erfindungsgemäße Lösung an allen Öffnungen angewandt.

Ein großer Vorteil der Erfindung liegt darin, dass die vorgeschlagenen Maßnahmen ohne großen Aufwand mit bislang bereits üblichen Materialien, Verfahren und Werkzeugen umgesetzt werden können. Wie vorstehend bereits erwähnt, wird die Ausnehmung vorzugsweise durch Prägen, Schleifen oder Fräsen der zweiten Dichtungslage erhalten. Der Übergang zwischen dem Bereich mit und ohne Ausnehmung kann dabei in Form einer Stufe, aber auch gleichmäßig, beispielsweise in Form eines keilförmigen oder abgerundeten Übergangs, erfolgen. Dadurch, dass die Ausnehmung vollständig und ununterbrochen vom Rand der Durchgangsöffnung bis in Radialrichtung hinter den Sickenaufstandsbereich verläuft, können die Bearbeitungsschritte zum Erhalt der Ausnehmung vergleichsweise einfach gestaltet werden, da beispielsweise das passgenaue Anfertigen und Anbringen mehrerer Bauteile entfallen kann.

Im Hinblick auf die Einfachheit der Herstellung ist solch eine erfindungsgemäße Dichtung besonders bevorzugt, bei der die zweite Dichtungslage im Bereich der Ausnehmung eine gleichmäßige Dicke und eine plane Oberfläche aufweist. Die Ausnehmung ist hier bezüglich ihrer Dicke und Oberflächentopographie über ihren gesamten Bereich gleichartig, beispielsweise was die Tiefe der Ausnehmung bezüglich des an die Ausnehmung angrenzenden Bereichs der zweiten Dichtungslage betrifft. Es ist jedoch ebenfalls möglich, im Bereich der Ausnehmung eine Topographie vorzugeben. Diese kann zum Beispiel darin bestehen, dass die Tiefe der Ausnehmung sich zumindest im Sickenaufstandsbereich in Umfangsrichtung um die Durchgangsöffnung ändert. Vorteilhaft nimmt die Tiefe der Ausnehmung mit zunehmendem Abstand von den die Ausnehmung umgebenden Schraubenöffnungen ab. Außerdem ist es bevorzugt, die Topographie nicht nur im Sickenaufstandsbereich, sondern über diesen hinaus und bevorzugt über die ganze Fläche der Ausnehmung vorzusehen. Dies erleichtert einerseits die Herstellung und andererseits wird auf diese Weise für in jedem Fall gleichmäßige Arbeitsbedingungen für die Sicke gesorgt, die zum Beispiel nicht durch eine zu enge Nut beeinträchtigt werden. Soll die Ausnehmung eine Topographie erhalten, wird diese bevorzugt durch Prägen, ggf. auch durch Schleifen oder Fräsen erzeugt.

Eine besonders gleichmäßige Einfederung der Sicke kann erreicht werden, wenn diese nicht nur auf der Seite radial außerhalb der Durchgangsöffnung, sondern auch auf der Öffnungsseite einen Verformungsbegrenzer erhält. Um das Auftreten von Verzügen zu minimieren, sollte dieser Verformungsbegrenzer jedoch möglichst nicht als massives Stopperelement ausgeführt sein. Statt dessen sollte er in seiner Höhe optimal an die Gegebenheiten des Motors angepasst sein. Bevorzugt wird daher auf der Seite der Durchgangsöffnung ein Verformungsbegrenzer eingesetzt, der in die erste Dichtungslage eingeformt ist. Besonders bevorzugt wird ein so genannter Wellenstopper verwendet, wie er von der Anmelderin in der WO 01/96768 A1 beschrieben wurde. Auch andere geprägte Stopperelemente des Standes der Technik können eingesetzt werden. Das Stopperelement liegt in Radialrichtung zwischen der Sicke und der Durchgangsöffnung und wird, genauso wie die Sicke, von der ersten Dichtungslage gebildet. Der Wellenstopper besteht aus einem Wellenprofil, das beispielsweise durch Prägen der ersten Dichtungslage erhalten wird und somit integral mit dieser ausgebildet ist. Damit sind die Stopperelemente zu beiden Seiten der Sicke in den ohnehin vorhandenen Dichtungslagen ausgebildet, ohne dass dafür irgendwelche zusätzlichen Teile nötig wären. Es wird also eine optimale Abdichtung bei minimalem Aufwand erhalten.

Auch im Hinterland der Dichtung können Oberflächenstrukturierungen oder sonstige Materialaufdickungen vorhanden sein. Bei Zylinderkopfdichtungen ist es beispielsweise bekannt, im Bereich der schmalseitigen Außenränder Aufdickungen durch Prägung oder in sonstiger Weise zu erzeugen, um für eine verbesserte Randabstützung zu sorgen. Sind solche Materialvergrößerungen im Hinterland vorhanden, sollten diese jedoch in ihrer Höhe deutlich geringer sein als eventuell an der von der Ausnehmung umgebenen Durchgangsöffnung vorhandene Stopperelemente, um deren Funktionsweise nicht zu beeinträchtigen. Bekannt und auch im Rahmen der Erfindung möglich sind zudem großflächige Oberflächenstrukturierungen, die beispielsweise der verbesserten Haftung von Beschichtungen dienen. Die Ausnehmung selbst ist bevorzugt frei von Oberflächenstrukturierungen und weist bevorzugt eine glatte Oberfläche auf.

Neben zweilagigen Dichtungen umfasst die Erfindung, wie erwähnt, auch Dichtungen mit mehr als zwei Lagen. Insbesondere zur Überwindung großer Dichtspalthöhen hat sich eine erfindungsgemäße Dichtung mit einer dritten Dichtungslage, durch die die Durchgangsöffnung ebenfalls mit konstanter Größe hindurchgeht, besonders bewährt. Bei dieser Ausführungsform ist die zweite Dichtungslage zwischen den zwei weiteren Dichtungslagen angeordnet. Vorzugsweise weist die dritte Dichtungslage ebenfalls eine die Durchgangsöffnung umlaufende Sicke auf, die mit ihrem Scheitelbereich auf der zweiten Dichtungslage in einem weiteren Sickenaufstandsbereich aufsteht, wobei die zweite Dichtungslage zur Seite der dritten Dichtungslage hin eine weitere ringförmige Ausnehmung aufweist, die sich vom Rand der Durchgangsöffnung bis zumindest hinter den weiteren Sickenaufstandsbereich erstreckt. Bei dieser Ausführungsform umfasst neben der ersten Dichtungslage somit auch die dritte Dichtungslage wenigstens ein elastisches Dichtelement. Entsprechend ist auch die dritte Dichtungslage, vergleichbar mit der ersten Dichtungslage, zweckmäßig aus einem elastisch verformbaren Material gefertigt. Neben der Ausnehmung, die die Sicke der ersten Dichtungslage stabilisiert, weist die zweite Dichtungslage bei dieser Ausführungsform eine weitere Ausnehmung auf, die zur Stabilisierung der Sicke der dritten Dichtungslage ausgebildet ist. Die zweite Dichtungslage wirkt somit gleichzeitig stabilisierend auf die Sicke der ersten und der dritten Dichtungslage. Günstig ist es dabei, wenn die erste Dichtungslage und die dritte Dichtungslage zumindest im Bereich der beiden Ausnehmungen spiegelsymmetrisch zueinander ausgebildet sind. Dies gilt insbesondere in Ergänzung zu einer spiegelsymmetrischen Ausbildung der beiden Ausnehmungen in der zweiten Dichtungslage.

Da erste und dritte Dichtungslage bevorzugt spiegelsymmetrisch ausgebildet sind, kann zur dritten Dichtungslage auf das vorstehend zur ersten Dichtungslage Ausgeführte zurückgegriffen werden. So kann auch die dritte Dichtungslage im Bereich zwischen der Sicke und der Durchgangsöffnung ein Stopperelement, bevorzugt ein geprägtes Stopperelement und insbesondere einen Wellenstopper, aufweisen. Die Summe der Sickenhöhen ist dabei größer als die Summe der Stopperhöhen.

Anstelle einer spiegelsymmetrischen Ausbildung ist aber auch eine unsymmetrische Ausbildung denkbar. Diese kann zum Beispiel dann sinnvoll sein, wenn stark unterschiedliche Gegenflächen abzudichten sind, an die die Dichtung jeweils gezielt angepasst werden muss. Die individuelle Ausbildung betrifft beispielsweise den Höhenunterschied zwischen dem Bereich mit der Ausnehmung und dem an diesen Bereich angrenzenden Bereich ohne Ausnehmung, die Breite der Ausnehmung, die Form der Ausnehmung, die Oberflächenbeschaffenheit der zweiten Dichtungslage im Bereich der Ausnehmung, Form und Größe der Sicken in erster und dritter Dichtungslage etc. Eine unsymmetrische Gestaltung kann sich auch dann ergeben, wenn die vom Motor vorgegebene Gesamtdicke (Dichtspalt) nur mit unterschiedlichen Blechdicken aus gängigen Standardblechdicken erhalten werden kann.

Je nach Einsatzgebiet ist es für eine erfindungsgemäße Dichtung vorteilhaft, wenn wenigstens eine der Dichtungslagen ein- oder beidseitig und ganz oder teilweise eine Beschichtung aufweist. Geeignet sind hier alle üblichen Beschichtungen und insbesondere solche, die eine besonders gute Mikroabdichtung gewährleisten. Grundsätzlich ist auch eine Beschichtung der zweiten Dichtungslage im Bereich der Ausnehmung/Ausnehmungen möglich.

Die Erfindung soll nachfolgend anhand von Zeichnungen näher erläutert werden. Diese Zeichnungen dienen ausschließlich der Illustration bevorzugter Ausführungsbeispiele der Erfindung, ohne dass die Erfindung auf diese beschränkt wäre. Gleiche Teile sind in den Zeichnungen mit gleichen Bezugszeichen versehen. In den Figuren zeigen schematisch:
- Figur 1:: eine Teildraufsicht auf eine erfindungsgemäße Flachdichtung am Beispiel einer Zylinderkopfdichtung;
- Figur 2:: einen Teilquerschnitt durch eine erste Ausführungsform einer erfindungsgemäßen Flachdichtung entlang der Linie A-A in Fig. 1;
- Figur 3:: einen Teilquerschnitt durch eine zweite Ausführungsform einer erfindungsgemäßen Flachdichtung entlang der Linie A-A in Fig. 1;
- Figur 4:: einen Teilquerschnitt durch eine dritte Ausführungsform einer erfindungsgemäßen Flachdichtung entlang der Linie A-A in Fig. 1 und
- Figur 5:: einen Teilquerschnitt durch eine vierte Ausführungsform einer erfindungsgemäßen Flachdichtung entlang der Linie A-A in Fig. 1.

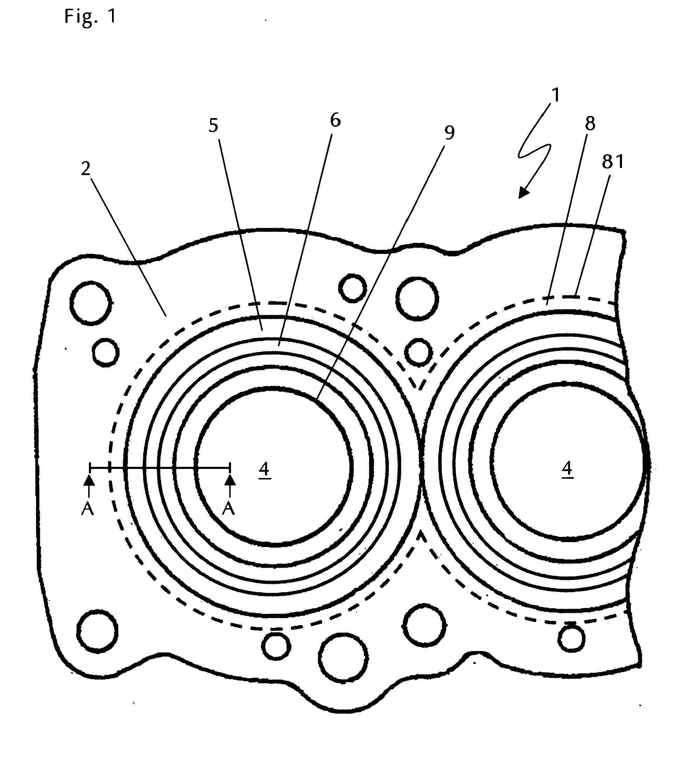

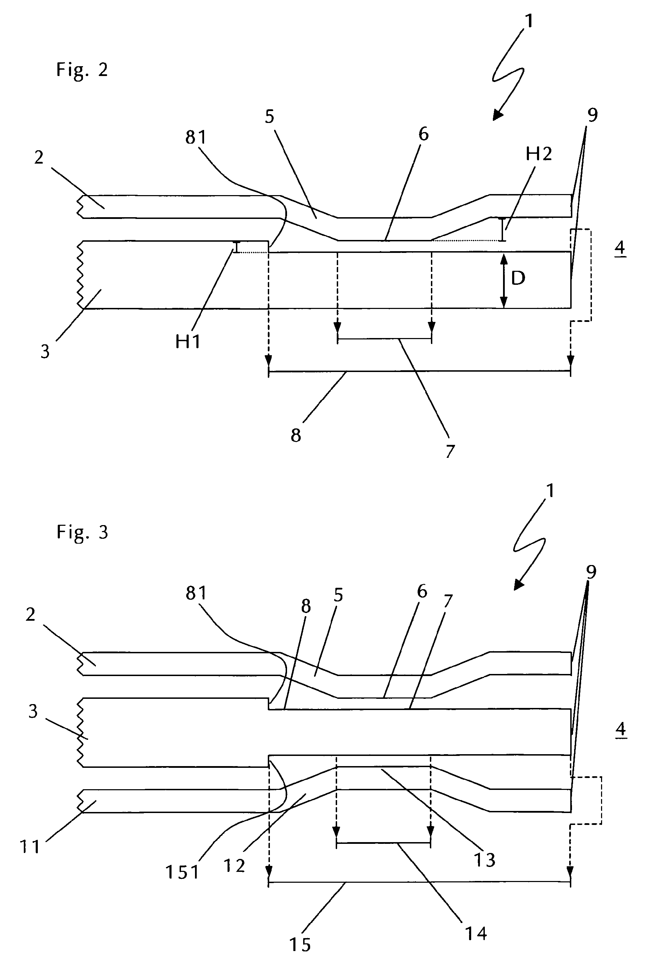

Fig. 1 zeigt eine Teil-Draufsicht auf eine Dichtung 1 am Beispiel einer Zylinderkopfdichtung, die zur Abdichtung zwischen einem Zylinderkopf und einem Motorblock eingespannt wird. Gezeigt sind zwei von beispielsweise insgesamt vier Brennraumöffnungen 4. Daneben weist die metallische Flachdichtung 1 neben Schraubenlöchern weitere Durchgänge, beispielsweise für Öl oder Wasser, auf, die in Fig. 1 nicht näher bezeichnet sind. Figuren 2 bis 4 zeigen verschiedene Ausführungsbeispiele erfindungsgemäßer Zylinderkopfdichtungen, die sich in der Anzahl ihrer Lagen und der Ausgestaltung um die Brennraumöffnungen 4 voneinander unterscheiden.

Die in Fig. 2 abgebildete Dichtung 1 ist eine Zweilagendichtung, welche eine erste Dichtungslage 2 und eine zweite Dichtungslage (in Fig. 1 durch die erste Dichtungslage 2 abgedeckt) aufweist. Erste Dichtungslage 2 und zweite Dichtungslage 3 grenzen unmittelbar aneinander an und sind aufeinanderliegend angeordnet. Der besseren Übersichtlichkeit halber sind die Dichtungslagen jedoch (wie auch in den nachfolgenden Figuren) voneinander entfernt dargestellt.

Die Brennraumöffnungen 4 sind hier jeweils von einer Sicke 5 mit einem trapezförmigen Querschnitt umgeben, die in der ersten Dichtungslage 2 vorhanden ist. Stärker gerundete Sickenquerschnitte wären in allen gezeigten Beispielen ebenfalls möglich. Die erste Dichtungslage 2 und die zweite Dichtungslage 3 sind so zueinander angeordnet, dass die Sicke 5 mit ihrem Scheitelbereich 6 auf der zweiten Dichtungslage 3 aufsteht. Dieser Kontaktbereich ist als Sickenaufstandsbereich 7 gekennzeichnet. Erfindungsgemäß liegt er im Bereich einer Ausnehmung 8 der zweiten Dichtungslage 3. Diese Ausnehmung 8 erstreckt sich vom Rand 9 der Brennraumöffnung 4 bis in einen Bereich, der radial außerhalb des Sickenaufstandsbereiches 7 liegt. Die Ausnehmung 8 ist als ringförmige Vertiefung in der ersten Dichtungslage 3 gebildet, wobei die Ausnehmungen im Bereich zwischen benachbarten Brennraumöffnungen 4 teilweise überlappen. Ihre Oberfläche ist plan und ihre Tiefe im gesamten Bereich gleichmäßig. Sie kann durch Prägen, Schleifen oder Fräsen der zweiten Dichtungslage 3 erzeugt sein. Im Bereich der Ausnehmung 8 weist die erste Dichtungslage eine Dicke D auf, die um eine Differenz H1 geringer ist als die originäre Dicke der Dichtungslage 3. Am Rand 81 der Ausnehmung 8 ist deshalb eine Stufe mit der Höhe H1 gebildet. Die Sicke 5 der ersten Dichtungslage 2 ist eine der zweiten Dichtungslage 3 zugewandte Vollsicke, die eine Höhe H2 hat. Die Höhe H1 am Rand 81 der Ausnehmung 8 ist kleiner als die Höhe H2 der Sicke.

Die erste Dichtungslage 2 liegt im eingespannten Zustand mit dem Scheitelbereich 6 der Sicke 5 im Sickenaufstandsbereich 7 der Ausnehmung 8 auf der zweiten Dichtungslage 3 auf. Bei normaler Verpressung berühren sich die Dichtungslagen 2 und 3 außerhalb der Ausnehmung 8 sowie im Sickenaufstandsbereich 7. Eine weitere Zusammenpressung der Sicke 5 darüber hinaus ist nicht mehr möglich. Damit verbleibt für die Sicke immer ein Spielraum mit der Höhe H1. Ein vollständiges Abplatten der Sicke 5 wird verhindert, die Elastizität der Sicke 5 auf Dauer erhalten.

Die Figuren 3 bis 5 zeigen weitere Ausführungsformen erfindungsgemäßer Dichtungen, erneut am Beispiel von Zylinderkopfdichtungen im Schnitt entlang Linie A-A in Fig. 1. Im Unterschied zur Dichtung 1 der Figur 1 sind die Dichtungen der Figuren 3 bis 5 dreilagig. In allen Ausführungsformen wird der äußere Verformungsbegrenzer für die Sicken 5 an den Brennraumöffnungen 4 erneut durch eine Stufe am Rand 81 einer um die Brennraumöffnung 4 umlaufenden Ausnehmung 8 gebildet. Für die Ausführung und Abmessung der Ausnehmung 8 gilt das vorstehend zu Figur 1 Dargelegte. Die Abmessungsangaben sind jedoch der Übersichtlichkeit halber weggelassen.

Die erfindungsgemäße Dichtung 1 gemäß Fig. 3 weist neben der ersten Dichtungslage 2 und einer zweiten Dichtungslage 3 eine dritte Dichtungslage 11 auf. Die zweite Dichtungslage 3 ist zwischen der ersten Dichtungslage 2 und der dritten Dichtungslage 11 angeordnet, und auch die dritte Dichtungslage 11 grenzt unmittelbar an die zweite Dichtungslage 3 an. Im Unterschied zur ersten Ausführungsform weist die zweite Dichtungslage 3 der Dichtung 1 eine zweite Ausnehmung 15 auf, die spiegelsymmetrisch zur ersten Ausnehmung 8 in der zweiten Dichtungslage 3 angeordnet ist. Die erste Ausnehmung 8 und die zweite Ausnehmung 15 bilden an ihren Rändern 81 und 151 jeweils eine Stufe mit gleicher Höhe H1.

In zur ersten Dichtungslage 2 analoger Weise weist die dritte Dichtungslage 11 eine die Durchgangsöffnung 4 vollständig umlaufende Sicke 12 auf, die eine Vollsicke (erneut mit trapezförmigem Querschnitt) ist und der zweiten Dichtungslage 3 zugewandt ausgebildet ist. Die Sicke 12 steht in ihrem Scheitelbereich 13 im Sickenaufstandsbereich 14 auf der zweiten Dichtungslage 3 auf. Die Sicken 5 und 12 weisen somit beide zur zweiten Dichtungslage 3. Die erste Dichtungslage 2 und die dritte Dichtungslage 11 sind zudem zumindest im Bereich um die Durchgangsöffnung 4 bis in Radialrichtung hinter die Sicken 5 und 12 spiegelsymmetrisch ausgebildet, so dass die gesamte Dichtung 1 entlang einer Spiegelachse, die in Radialrichtung durch die zweite Dichtungslage 3 verläuft, zumindest im Bereich um die Durchgangsöffnung 4 bis hinter die Sickenaufstandsbereiche 7 und 14 spiegelsymmetrisch ist. Diese besondere Ausführung der zweiten Dichtungslage 3 mit den beiden Ausnehmungen 8 und 15 ermöglicht, beide Sicken 5 und 12 der beiden Dichtungslagen 2 und 11 gleichzeitig vor übermäßiger Komprimierung zu schützen, ohne dass zusätzliche Komponenten in der Dichtung 1 benötigt werden. Dies gilt im Übrigen auch für alle übrigen in den Figuren dargestellten Dichtungen.

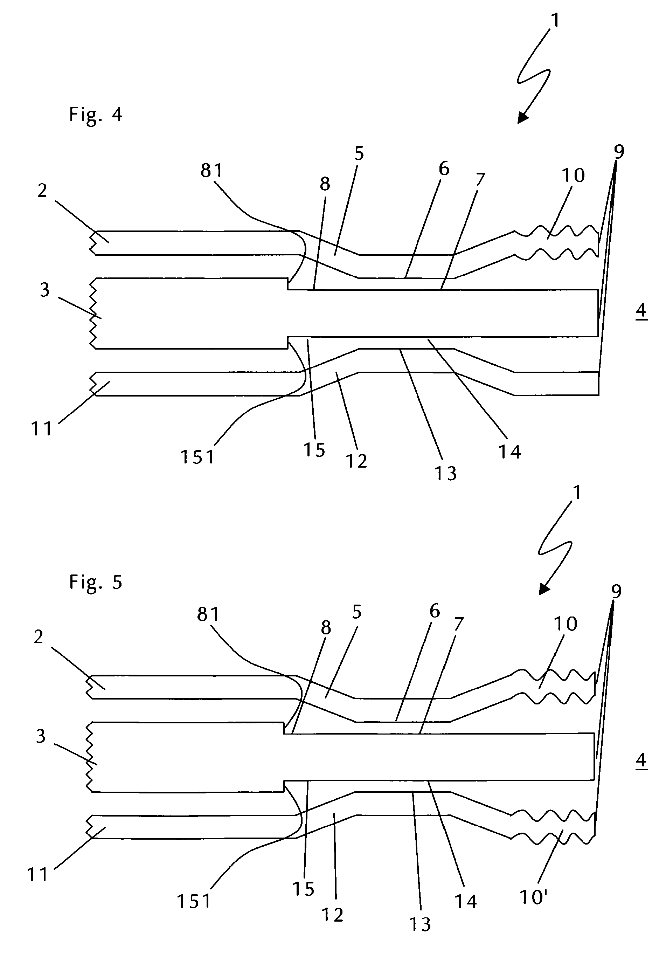

Die Dichtungen der Figuren 4 und 5 betreffen weitere Ausführungsformen dreilagiger Dichtungen. Die in Figuren 2 und 3 gekennzeichneten Ausmaße bezüglich der Erstreckung des zweiten Sickenaufstandsbereiches 14 und der zweiten Ausnehmung 15 in Relation zur dritten Dichtungslage 11 gelten auch für die in den Figuren 4 und 5 gezeigten Ausführungsformen erfindungsgemäßer Dichtungen und sind in den Figuren 4 und 5 nicht näher beschrieben.

Die Dichtung entspricht bis auf die Ausgestaltung der ersten Dichtungslage 2 im Bereich der Brennraumöffnung 4 der Dichtung gemäß Fig. 3. In der ersten Dichtungslage 2 weist sie einen integral mit der ersten Dichtungslage 2 ausgebildeten Wellenstopper 10 als inneres Stopperelement für die Sicke 5 auf. Der Wellenstopper umläuft die Durchgangsöffnung 4 unmittelbar an deren Rand 9 angrenzend. Im Bereich des Wellenstoppers 10 hat die erste Dichtungslage 2 ein wellenförmiges Profil, das beispielsweise durch Prägen der ersten Dichtungslage in diesem Bereich erzeugt wurde. Hier ist die Materialdicke größer als die originäre Dicke der Dichtungslage 2, aber kleiner als die Höhe H2 der Sicke 5. Der durch die wellenförmige Profilierung erzeugte Überstand wirkt als Verformungsbegrenzer für die Sicke 5. Damit sind auf beiden Seiten der Sicke 5 Verformungsbegrenzer vorhanden, die für ein gleichmäßiges Einfedern der Sicke 5 sorgen und die Sicke 5 vor einer übermäßigen Komprimierung schützen. Wie bei der Ausnehmung 8 handelt es sich auch bei dem Wellenstopper 10 um ein Element, das kein zusätzliches Material zur Erzeugung eines Stoppers für die Sicke 5 benötigt und unmittelbar und auf einfache Weise aus einer bereits vorhandenen Dichtungslage erzeugt werden kann.

Im Unterschied zur Dichtung der Fig. 4 weist die Dichtung 1 gemäß Fig. 5 auch in der dritten Dichtungslage 11 einen Wellenstopper 10' auf. Form und Wirkungsweise entsprechend denjenigen des Wellenstoppers 10 der Figur 4. Auf diese Weise ist neben der Sicke 5 der ersten Dichtungslage 2 auch die Sicke 12 der dritten Dichtungslage 11 in Radialrichtung von Stopperelementen eingeschlossen, die ein Zusammenpressen der Sicke 12 bis in den unelastischen Bereich verhindern.

## Patentansprüche

1. Metallische Flachdichtung (1), umfassend eine erste Dichtungslage (2) und eine zweite Dichtungslage (3), wobei die beiden Dichtungslagen (2, 3) übereinander und unmittelbar aneinander angrenzend angeordnet sind, eine Durchgangsöffnung (4), die mit konstanter Größe durch beide Dichtungslagen (2, 3) hindurchgeht, und in der ersten Dichtungslage (2) eine die Durchgangsöffnung (4) vollständig umlaufende Sicke (5), die mit einem Scheitelbereich (6) in einem Sickenaufstandsbereich (7) auf der zweiten Dichtungslage (3) aufsteht,
**dadurch gekennzeichnet,**
**dass** die zweite Dichtungslage (3) eine ringförmige Ausnehmung (8) aufweist, die sich vom Rand (9) der Durchgangsöffnung (4) zumindest bis hinter den Sickenaufstandsbereich (7) erstreckt.

2. Metallische Flachdichtung (1) nach dem vorhergehenden Anspruch,
**dadurch gekennzeichnet,**
**dass** die zweite Dichtungslage (3) im Bereich der Ausnehmung (8) eine gleichmäßige Dicke (D) und eine plane Oberfläche aufweist.

3. Metallische Flachdichtung (1) nach dem Anspruch 1,
**dadurch gekennzeichnet,**
**dass** die zweite Dichtungslage (3) im Bereich der Ausnehmung (8) eine entlang des Umfangs der Durchgangsöffnung variierende Dicke (D) aufweist.

4. Metallische Flachdichtung (1) nach einem der vorhergehenden Ansprüche,
**dadurch gekennzeichnet,**
**dass** die erste Dichtungslage (2) im Bereich zwischen der Sicke (5) und der Durchgangsöffnung (4) ein Stopperelement, insbesondere einen geprägten Stopper und besonders bevorzugt einen Wellenstopper (10), aufweist.

5. Metallische Flachdichtung (1) nach einem der vorhergehenden Ansprüche,
**dadurch gekennzeichnet,**
**dass** die zweite Dichtungslage (3) in einem in Radialrichtung von der Durchgangsöffnung (4) aus hinter der Ausnehmung (8) liegenden Bereich plan ausgebildet ist.

6. Metallische Flachdichtung (1) nach einem der Ansprüche 1 bis 5,
**dadurch gekennzeichnet,**
**dass** die zweite Dichtungslage (3) in einem in Radialrichtung von der Durchgangsöffnung (4) aus hinter der Ausnehmung (8) liegenden Bereich weitere geprägte Elemente, insbesondere Ausnehmungen um weitere Durchgangsöffnungen, aufweist.

7. Metallische Flachdichtung (1) nach einem der vorhergehenden Ansprüche,
**dadurch gekennzeichnet,**
**dass** sie eine dritte Dichtungslage (11) aufweist, durch die die Durchgangsöffnung (4) ebenfalls mit konstanter Größe hindurchgeht, wobei die zweite Dichtungslage (3) zwischen der ersten Dichtungslage (2) und der dritten Dichtungslage (11) angeordnet ist.

8. Metallische Flachdichtung (1) nach Anspruch 7,
**dadurch gekennzeichnet,**
**dass** die dritte Dichtungslage (11) eine die Durchgangsöffnung (4) umlaufende Sicke (12) aufweist, die in einem Scheitelbereich (13) auf der zweiten Dichtungslage (3) in einem weiteren Sickenaufstandsbereich (14) aufsteht, und dass die zweite Dichtungslage (3) eine weitere ringförmige Ausnehmung (15) aufweist, die sich vom Rand (9) der Durchgangsöffnung (4) zumindest bis hinter den weiteren Sickenaufstandsbereich (14) erstreckt.

9. Metallische Flachdichtung (1) nach einem der Ansprüche 7 oder 8,
**dadurch gekennzeichnet,**
**dass** die dritte Dichtungslage (11) im Bereich zwischen der Sicke (12) und der Durchgangsöffnung (4) ein Stopperelement, insbesondere einen geprägten Stopper und besonders bevorzugt einen Wellenstopper (10), aufweist.

10. Metallische Flachdichtung (1) nach Anspruch 8 oder 9,
**dadurch gekennzeichnet,**
**dass** die beiden Ausnehmungen (8, 15) der zweiten Dichtungslage (3) spiegelsymmetrisch zueinander ausgebildet sind.

11. Metallische Flachdichtung (1) nach einem der Ansprüche 7 bis 10,
**dadurch gekennzeichnet,**
**dass** die erste Dichtungslage (2) und die dritte Dichtungslage (11) zumindest im Bereich der beiden Ausnehmungen (8, 15) spiegelsymmetrisch zueinander ausgebildet sind.

12. Metallische Flachdichtung (1) nach einem der vorhergehenden Ansprüche,
**dadurch gekennzeichnet,**
**dass** wenigstens eine der Dichtungslagen (2, 3, 11) ein- oder beidseitig und ganz oder teilweise eine Beschichtung aufweist.

13. Verwendung einer metallische Flachdichtung (1) nach einem der vorhergehenden Ansprüche, zur Abdichtung zweier Bauteile gegeneinander, wobei die Bauteile im Betrieb wechselnden Drücken und/oder wechselnden Temperaturen ausgesetzt sind.

14. Verwendung einer metallischen Flachdichtung (1) nach einem der Ansprüche 1 bis 12 zur Abdichtung zweier Bauteile in einem Verbrennungsmotor gegeneinander, insbesondere als Zylinderkopfdichtung, Abgaskrümmerdichtung oder sonstige Dichtung im Abgasstrang.
